# EUROPEAN PATENT SPECIFICATION

(11) **EP 4 499 261 B1**
(45) Date of publication and mention of the grant of the patent: **25.03.2026**
(21) Application number: 23718075.7
(22) Date of filing: 23.03.2023
(51) Int. Cl.: B01D 25/172, B01D 25/176

(54) **A PENDULUM SUPPORTING DEVICE**
PENDELSTÜTZVORRICHTUNG
DISPOSITIF DE SUPPORT DE PENDULE

(30) Priority: 24.03.2022 SE 2250371
(43) Date of publication of application: 05.02.2025
(73) Proprietor: LUOSSAVAARA-KIIRUNAVAARA AB, 971 28 Luleå (SE)
(72) Inventor: LARSSON, Ove, 98140 Kiruna (SE)
(74) Representative: Zacco Sweden AB
(86) International application number: PCT/SE2023/050263
(87) International publication number: WO 2023/182922

(56) References cited:
- WO-A1-2007/053080
- CN-A- 111 729 362
- US-A- 4 132 647
- US-A- 5 635 061

## Description

### TECHNICAL FIELD

The present invention relates to a pendulum supporting device configured to be mounted to a filter plate member, the pendulum supporting device comprises; a carriage block member arranged between and rigidly mounted to; an inner carriage block holding member pivotable about an axis of a filter plate fitting member of the pendulum supporting device; an outer carriage block holding member; and further comprises an engagement portion configured for engagement with a drive member.

The present invention relates to a filter press apparatus comprising a number of vertically supported filter plate members each having a pendulum supporting device for moving the filter plate members along the filter press apparatus.

The present invention concerns the mining industry and especially may concern a metal ore pelletizing plant and the producing of solid metal ore material or metal ore slurry.

The present invention may concern the iron ore oxide material production industry configured for reducing iron ore oxide material into iron material by means of hydrogen generated by electrolysis of water.

### BACKGROUND OF THE INVENTION

A prior art pendulum supporting device ise configured to be coupled to a drive member, such as chain, via an engagement portion of the pendulum supporting device .

The document KR 20080005600 U describes a filter plate fitting member configured to be coupled to a chain via an engagement portion. KR 20080005600 U does not permit pivotal pendulum motion of the filter plate fitting member. WO 2007/053080 A1 and CN 111 729 362 A describe also pendulum supporting devices.

### SUMMARY OF THE INVENTION

There is an object to provide a robust and reliable functionality of a pendulum supporting device .

There is an object to provide a pendulum supporting device that permits pendulum motion of a filter plate member of a filter press apparatus.

There is an object to provide a pendulum supporting device that is configured for reliable sliding over an elonated guide member.

There is an object to provide long-life, reliable and efficient filtering functionality of a filter press apparatus making use of the pendulum supporting device.

It is an object to provide a pendulum supporting device that is configured to be supported and guided on the elongated guide member.

It is an object to provide a pendulum supporting device featuring rigid and/or resistant parts under operation of the pendulum supporting device, while transmitting translational motion and force from the drive member to the filter plate member.

It is an object to minimize abnormal sliding and skew orientation of the pendulum supporting device during the un-loading position.

It is an object to minimize any eventual edge stress effect affecting the replaceable sliding element in contact with the elongated guide member.

It is an object to provide high level of efficiency for filtration achieved by the filter press apparatus at the same time as wear and misalignment of the carriage block member.

It is an object to provide a pendulum supporting device, which in turn promotes minor maintenance of the pendulum supporting device and a minimum of unplanned downtime.

There is an object to provide a pendulum supporting device providing minor service time for exchange of sliding element configured to slide over an elongated guide member.

These or at least one of said objects has been achieved by a pendulum supporting device configured to be mounted to a filter plate member, the pendulum supporting device comprises; a carriage block member arranged between and rigidly mounted to; an inner carriage block holding member pivotable about an axis of a filter plate fitting member of the pendulum supporting device; an outer carriage block holding member; and further comprises an engagement portion configured for engagement with a drive member; wherein the engagement portion is rigidly mounted to the outer carriage block holding member.

In such way is achieved that advantageous and efficient force distribution is provided within the pendulum supporting device, wherein the outer carriage block holding member being rigidly mounted to the carriage block member, by that these members function as load carrying members providing a stable structure during the application of a drive force onto the engagement portion, when the filter plate member is moved.

Alternatively, the carriage block member comprises a first replaceable sliding element configured for supporting the pendulum supporting device onto an elongated guide member and configured for sliding along the elongated guide member.

Alternatively, the carriage block member comprises a second replaceable sliding element configured for supporting the pendulum supporting device onto the elongated guide member and configured for sliding along the elongated guide member.

Alternatively, the first and/or second replaceable sliding element being fixedly mounted to the carriage block member by means of a screw member.

Alternatively, the carriage block member exhibits a rectanguar quadrilateral cross-section, preferably quadratic cross-section, seen in a plane parallel with the prolongation of the elongated guide member.

Alternatively, the first replaceable sliding element is mounted at a first side of the carriage block member and the second replaceable sliding element is mounted at the opposite side relative the first side.

In such way is achieved that the carriage block member, for changing to a new sliding element, just has to be rotated a half turn. This also promotes cost-effective service and maintanence of the pendulum supporting device .

Alternatively, a respective replaceable sliding element is mounted on each side of the carriage block member. In such way the carriage block member just has to be rotated a quarter turn for changing sliding element.

Alternatively, the filter plate member is lifted so that the carriage block member will be free from the elongated guide member for permitting that the carriage block member is permitted to be rotated.

By means of the outer carriage block holding member rigidly mounted to the carriage block member, which in turn is rigidly mouinted to the inner carriage block holding member partly or entirely comprising a bearing shaft of the bearing element, it is achieved a robust and reliable functionality of the pendulum supporting device is achieved.

In such way by that these members function as load carrying members providing a stable structure during the application of a drive force onto the engagement portion, when the filter plate member is moved.

In such way, skew orientation of the carriage block member is avoided, wherein the sliding friction between the replaceable sliding element and the elongated guide member is evenly distributed. This prevents any oscillating motion of the carriage block member and prevents jamming, which could imply demitral effect on the bearing element.

In such way is mechanical play is minimized between the filter plate fitting member and the assembly of the inner carriage block holding member, the carriage block member and the outer carriage block holding member.

In such way, skew orientation of the filter plate member is avoided, which in turn implies that the filter plate members provide efficient filtering due to the fact that filters of the filter plate members thus will protected from wear and abnormal contact during the loading position and fluid channels of the filter plate members will stay intact.

Alternatively, the inner carriage block holding member, the carriage block member and the outer carriage block holding member are rigidly mounted to each other and is configured to be demountable for service and maintenance.

Alternatively, the bearing element is in contact with a supporting surface of the elongated guide member defining a contact zone area, which functions as a support area and a sliding area.

Alternatively, the filter plate fitting member comprises a bearing element configured to permit pendulum motion of the inner carriage block holding member relative the filter plate fitting member.

Alternatively, the pendulum supporting device is configured for transferring a force for moving the fiter plate member, wherein the assembly is configured (carriage block holding members and carriage block member) to transfer the force applied on the engagement portion via the bearing element to the filter plate fitting member for moving the filter plate member.

In such way no mechanical play occurs in the bearing element over long time. This is achieved by the fact that there is no high force concentration on the bearing element.

In such way wear of the bearing element is minimized, minor surface fatigue of the sliding surfaces, wherein skew orientation of the filter plare moving device and filter plate member is avoided.

Alternatively, the pendulum motion is provided about an axis.

Alternatively, the axis or pivotal axis or pendulum axis is directed along the plane of the filter plate member and ortogonally to a vertical side of the filter plate member.

Alternatively, the axis or pivotal axis is directed ortogonally to the prolongation of the elongated guide member (e.g. extending in an horizontal direction).

In such way is achieved that the carriage block member is pivotable relative the filter plate member enabling pendulum motion of the filter plate member and opening of adjacent filter plate members for removing filter cakes from the filter plate member.

Alternatively, two adjacent filter plate members are coupled to each other via by means of a chain linkage.

Alternatively, the opening generates a start torque resulting in the pendulum motion.

Alternatively, the opening is provided by an opening mechansim configured to control the removal of filter cakes from the filter plate members.

In such way is achieved that, upon application of the drive force onto the engagement portion for an un-loading position, even force distribution proprogates from the engagement portion to the filter plate fitting member via the outer carriage block holding member, the carriage block member, the inner carriage block holding member and the bearing element.

In such way is prevented uneven wear of the bearing element and uneven wear of the replaceable sliding element and minimizing surface fatigue of the sliding surfaces.

In such way is achieved elimination of stress condition in the bearing element. The high contact pressure between the elongated guide member and the replaceable sliding element generates propogation of forces evenly distrubuted through the assembly.

Alternatively, the bearing element comprises a bearing shaft of the filter plate fitting member, which bearing shaft extends into the inner carriage block holding member.

Alternatively, the bearing shaft extends further through the inner carriage block holding member and/or partly into or through the carriage block member and/or further into the outer carriage block holding member.

Alternatively, the bearing shaft extends into a second bore of the carriage block member and alternatively further into a third bore of the outer carriage block holding member.

Alternatively, the bearing element comprises a bearing shaft rotationally mounted in a housing of the filter plate fitting member.

In such way is achieved a stable bearing element promoting a stable load carrying structure that is pivotable, wherein eventual load variations acting on the carriage block member do not give any large wear on the bearing element, especially in regard to start torque affecting the bearing element.

In such way is achieved a stable bearing element that promotes pendulum precision, stiffnes of the bearing element, efficient load distribution and load-carrying capacity, long-life of the bearing element, etc.

Alternatively, the bearing element comprises a bearing shaft of the filter plate fitting member, which bearing shaft protrudes through the inner carriage block holding member, through the carriage block member and partly into the outer carriage block holding member.

Alternatively, the bearing element comprises a bearing shaft of the filter plate fitting member, which bearing shaft extends through a first bore of the inner carriage block holding member.

Alternatively, the bearing shaft extends further through a second bore or partly into a second bore of the carriage block member and/or further into a third bore of the outer carriage block holding member.

Alternatively, the carriage block member comprises a lubrication channel coupled to a lubrication supply source and configured to lubricate the bearing element.

In such way wear and surface fatigue is reduced, which promotes long-life of the pendulum supporting device .

Alternatively, the bearing element is sealed by means of a sealing member for providing efficient lubrication of the bearing element.

Alternatively, the outer carriage block holding member is also configured for sealing off the bearing element and restricting lubrication fluid from leaving the bearing element.

In such way is achieved that eventual abrasive particles are prevented to reach the bearing element.

Alternatively, the engagement portion is configured to engage a coupling unit of the drive member, which coupling unit features a loading position and an un-loading position.

Alternatively, the drive member comprises a chain linkage having a plurality of coupling units, each coupling unit is configured for contraction of the chain linkage for said loading position and is configured for expansion of the chain linkage for said un-loading position.

Alternatively, the engagement portion is configured for engagement with the coupling unit for moving the filter plate member by means of the pendulum supporting device .

Alternatively, the engagement portion is an integrated part of the outer carriage block holding member, which is rigidly mounted to the the carriage block member by means of at least one screw.

In such way is achieved a stable structure of the pendulum supporting device .

Alternatively, the engagement portion is formed as a spindle or as a pin or having any suitable form for engagement with the drive member, which engagement portion may be rigidly screwed into the outer carriage block holding member.

Alternatively, the engagement portion is formed as an elongated body having an outer end and an inner end.

Alternatively, the inner end of the engagement portion comprises a threaded male portion, which mates with a corresponding threaded female portion of the outer carriage block holding member, and comprises an outer end configured for engagement with the drive member.

Alternatively, the drive member comprises a chain linkage having a plurality of coupling units, each coupling unit is configured for contraction of the chain linkage for said loading position and is configured for expansion of the chain linkage for said un-loading position.

Alternatively, the chain linkage comprises a first coupling unit coupled to an adjacent second coupling unit.

Alternatively, the first coupling unit exhibits a first elongated plate member comprising a first engagement apperture and a first engagement slit extending along the first elongated plate member.

Alternatively, the second coupling unit exhibits a second elongated plate member comprising a second engagement apperture and a second engagement slit extending along the second elongated plate member.

Alternatively, a filter press apparatus comprises a first engagement portion of a first pendulum supporting device and comprises a second engagement portion of a second pendulum supporting device, wherein the first engagement portion is positioned adjacent the second engagement portion.

Alternatively, the filter press apparatus comprises a first filter plate member exhibing the first engagement portion and comprises a second filter plate exhibiting the second engagement portion, wherein the first and second filter plate member are oriented vertically and parallel to each other.

Alternatively, a first outer end of the first engagement portion exhibits a circular cross-section and is configured to be introduced into a mating first engagement apperture of the first coupling unit of the chain linkage.

Alternatively, a second outer end of the second engagement portion exhibits a circular cross-section and is configured to be introduced into a mating second engagement apperture of the second coupling unit of the chain linkage.

Alternatively, the first engagement portion is configured to be engaged with the first engagement apperture and is configured to be engaged with the second engagement slit of the second coupling unit.

Alternatively, the second engagement portion is configured to be engaged with the second engagement apperture of the second coupling unit.

In such way is provided a chain linkage having a plurality of coupling units, each coupling unit is configured for contraction of the chain linkage for said loading position (the filter plate members being contracted or pressed toward each other) and is configured for expansion of the chain linkage for said un-loading position (the fiter plate members being separated from each other).

Alternatively, the filter press apparatus comprises a filter plate opening mechanism configured for providing the unloading position of the filter plate member and/or mechanical dewatering/filtration.

Alternatively, the filter press apparatus is configured for filtration technology including separation of solid metal ore material from fluid.

Alternatively, mechanical removal of fluid is achieved by means of the filter press apparatus from an metal ore slurry to obtain solid metal ore material and/or recovery of a valuable fluid for further processing, transportation, agglomeration or disposal.

Alternatively, the filter press appartus is configured for compression of the filter plate members for replacing the fluid in a filter cake of the filter plate member with solid metal ore material.

Alternatively, the filter press apparatus is configured to separate the filter plate members to the un-loading position and is configured to repeat the operation and/or fully or partially separate the filter plate members in succession.

Alternatively, the fluid in the filter cake is replaced by means of air blowing.

Alternatively, the filter plate member is a vertical filter plate member that is pivotaly supported by the elongated guide member by means of the carriage block member, wherein the pendulum supporting device is mounted on an upper portion of an vertical edge of the filter plate member.

Alternatively, the elongated guide member comprises a horisontally oriented supporting and guiding bar.

Alternatively, the carriage block member is configured to support the filter plate member on the horisontally oriented supporting and guiding bar.

Alternatively, the pendulum supporting device is configured for pendulum motion of the filter plate member by means of the pivotable arranged carriage block member, which further is adapted to slide along the horisontally oriented supporting and guiding bar.

A plate opening mechanism of a filter press apparatus having a number of vertically suspended and/or vertically supported filter plates for succesively opening some of them to discharge filter cakes after completion of squezze or dewatering. The filter plates are coupled to each other by means of the chain linkage.

Alternatively, the chain linkage is configured to move the filter plate members to the un-loading (opened) position, wherein the filter plate members are separated from each other.

Alternatively, the filter cakes are discharged or removed from the separated filter plate members on both sides of the filter plate members.

Alternatively a first drive member (e.g. electric motor and/or hydraulic actuator) is configured to drive the chain linkage.

Alterantively, a second drive member (e.g. hydraulic press actuator device) is configured to compress the filter plate members for providing the loading position, wherein the chain linkage is contracted.

Alternatively, the filter press apparatus comprises two elongated guide members arranged in parallel and each elongated guide member is arranged on opposite vertical edge side of the respective filter plate member.

Alternatively, the respective adjacent filter plate members are coupled to each other by means of the coupling units having equal length.

Alternatively, the distance between the filter plate members become substantially equal in the un-loaded position.

Alternatively, in the un-loading position, the discharge of filter cakes may be effected by vibrating the filter cloths of the filter plate members by means of a filter cloths vibrating mechanism or by means of washing the filter cloths by means of a spray washing device inserted between the filter plate members.

Alternatively, the filter press apparatus comprises a frame, a first and second drive member, a plurality of filter plate members driven by the first and second drive members to move back and forth along the frame to be at a loading position and an un-loading position.

Alternatively, the filter press apparatus comprises a filter cake un-loading device including a third drive member.

Alternatively, the engagement portion is formed as a spindle or as a pin or having any suitable form for engagement with the drive member, which engagement portion may be rigidly screwed into the outer carriage block holding member.

Alternatively, the engagement portion (e.g. pin or spindle or hook or other) is configure for locked engagement with the coupling unit of the chain linkage.

Alternatively, the engagement portion is configured to, when the chain linkage is contracted, slide in an elongate aperture of the coupling unit wherein the coupling unit is rotated to some extent.

Alternatively, a fixing aperture is formed in an outer section of the engagement portion for insertion of a fixation pin.

Alternatively, the outer carriage block holding member is rigidly mounted to the carriage block member on the opposite side of the carriage block member relative the mount of the inner carriage block holding member.

Alternatively, guide flanges of the respective inner and outer carriage block holding member are configured to restrict and/or guide the carriage block member along the elongated guide member.

Alternatively, the engagement portion is positioned co-linear with the direction of the axis and has a centre line that lies along an imaginary prolongation of the axis.

Alternatively, an engagement position of the engagement portion engaging the coupling unit is positioned co-linear or substantially co-linear with and lies along the imaginary prolongation of the axis.

These or at least one of said objects has been achieved by a filter press apparatus comprising a number of vertically supported filter plate members, the filter press apparatus is configured for filtration technology including separation of solid metal ore material from fluid, including a loading position for compression of the filter plate members to each other and an un-loading position for releasing the solid metal ore material, the filter press apparatus comprises a drive member configured to engage a pendulum supporting device of the respective filter plate member for achieving said unloading position; the pendulum supporting device comprises the features according to any of the preceding claims 1 to 10.

Alternatively, the filter press apparatus is configured for separating the filter plate members from each other for replacing the fluid in a filter cake of the filter plate member with solid metal ore material.

The pendulum supporting device may be called a filter plate fitting.

The filter plate member may be called a filter plate.

The carriage block member may be called a supporting/sliding block.

The inner carriage block holding member may be called an inner carriage block holder.

The outer carriage block holding member may be called an outer carriage block holder.

The drive member may be called drive line.

The coupling unit may be called drive chain link.

The bearing element may be called bearing.

The present disclosure or disclosures may not be restricted to the examples described above, but many possibilities to modifications, or combinations of the described examples thereof should be apparent to a person with ordinary skill in the art without departing from the basic idea as defined in the appended claims.

### BRIEF DESCRIPTION OF THE DRAWING

Hereinafter, exemplary embodiments of the present invention will be described with reference to the accompanying drawings, wherein for the sake of clarity and understanding of the invention some details of no importance may be deleted from the drawings.
Fig. 1 illustrates a first example of a pendulum supporting device of a filter press apparatus;
Figs. 2a-2c illustrate a second example of a pendulum supporting device;
Fig. 3 illustrates a third example of a pendulum supporting device;
Fig. 4 illustrates a fourth example of a pendulum supporting device;
Fig. 5 illustrates a fifth example of a pendulum supporting device;
Fig. 6 illustrates a sixth example of a pendulum supporting device; and
Figs. 7a-7b illustrates a seventh example of a pendulum supporting device.

### DETAILED DESCRIPTION

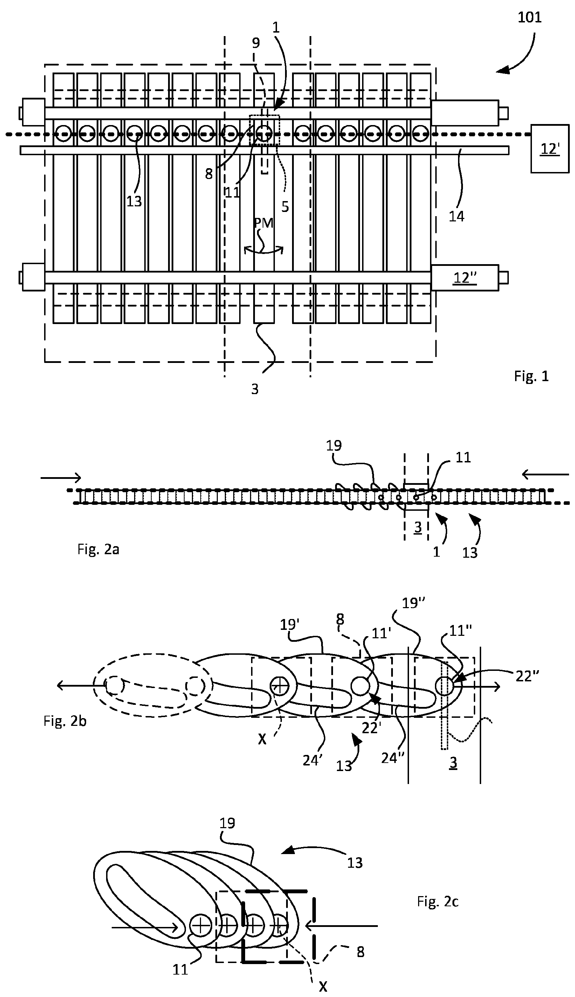

Fig. 1 illustrates a first example of a pendulum supporting device 1 of a filter press apparatus 101. The pendulum supporting device 1 is configured to be mounted to a filter plate member 3 of the filter press apparatus 101. The pendulum supporting device 1 comprises a carriage block member 5 arranged between and rigidly mounted to an inner carriage block holding member (not shown) pivotable arranged to a filter plate fitting member 9 of the pendulum supporting device 1. The pendulum supporting device 1 further comprises an outer carriage block holding member 8 and further comprises an engagement portion 11 configured for engagement with a drive member 13. A first drive member 12' (e.g. electric motor and/or hydraulic actuator) is configured to drive the drive member 13. A second drive member 12" (e.g. hydraulic press actuator device) is configured to compress the filter plate members 3 against each other for providing a loading position for squezze and/or mechanical dewatering. The engagement portion 11 is rigidly mounted to the outer carriage block holding member 8. The filter plate fitting member 9 comprises a bearing element (not shwon) configured to permit pendulum motion PM of the carriage block member 5 and/or inner carriage block holding member relative the filter plate fitting member 9 in an un-loading position for succesively opening of the filter plate members 3 to discharge filter cakes after completion of squezze and/or mechanical dewatering. The pendulum supporting device 1 permits pendulum motion PM of the filter plate member 3. The filter press apparatus 101 comprises a filter plate opening mechanism (not shown) configured for providing the un-loading position of the filter plate members for e.g. mechanical dewatering/filtration, which filtration technology includes separation of solid metal ore material from fluid. The filter press apparatus 101 further comprises an elongated guide member 14 comprising a horisontally oriented supporting and guiding bar configured for supproting the carriage block member 5. The carriage block member 5 is configured to support the filter plate member 3 on the elongated guide member 14. The pendulum supporting device 1 is configured for pendulum motion of the filter plate member 3 by means of the pivotable arranged carriage block member 5, which further is adapted to slide along the elongated guide member 14. The engagement portion 11 is configured to engage a coupling unit (not shown) of the drive member 13, which coupling unit 19 features a loading position and an un-loading position. The engagement portion 11 is an integrated part of the outer carriage block holding member 8, which is rigidly mounted to the the carriage block member 5. The filter press apparatus 101 comprises a number of vertically supported filter plate members 3. The filter press apparatus 101 is configured for filtration technology including separation of solid metal ore material from fluid, including a loading position for compression of the filter plate members to each other and an un-loading position for releasing the solid metal ore material. The filter press apparatus 101 comprises the drive member 13 configured to engage the pendulum supporting device 1 of the respective filter plate member 3 for achieving said unloading position. Alternatively, the filter press apparatus is configured for separating the filter plate members from each other for replacing the fluid in a filter cake of the filter plate member with solid metal ore material.

Figs. 2a-2c illustrate a second example of a pendulum supporting device 1. Fig. 2a shows a engagement portion 11 of a pendulum supporting device 1, which engagement portion 11 is configured for engagement with a drive member 13 adapted to move a filter plate member 3 by means of the pendulum supporting device 1. The drive member 13 comprises a chain linkage having a plurality of coupling units 19. Each coupling unit 19 is configured for contraction of the chain linkage for providing a loading position and expansion of the chain linkage for providing an un-loading position. Fig. 2b shows the drive member 13 more in detail. The chain linkage comprises a first coupling unit 19' coupled to an adjacent second coupling unit 19". A first outer end of a first engagement portion 11' exhibits a circular cross-section and is configured to be introduced into a mating first engagement apperture 22' of the first coupling unit 19'. A second outer end of a second engagement portion 11' exhibits a circular cross-section and is configured to be introduced into a mating second engagement apperture 22" of the second coupling unit 19". The first engagement portion 11' is configured to be engaged with the first engagement apperture 22' and is configured to be engaged with a second engagement slit 24" of the second coupling unit 19". Fig. 2c shows the engagement portion 11 of an outer carriage block holding member 8 of the exemplary pendulum supporting device and shows contraction functionality of the a drive member 13 being in loading position. A chain linkage of the drive member 13 comprises a plurality of coupling units 19, which are interlinked to each other via the respective engagement portion 11. In the loading position, mechanical removal of fluid is achieved by means of compressing the filter plate members to each other. In the un-loading position, solid metal ore material is recovered. A filter plate opening mechanism (not shown) of a filter press apparatus (not shown) having a number of vertically suspended and/or vertically supported filter plates for succesively opening some of them to discharge filter cakes after completion of squezze or dewatering.

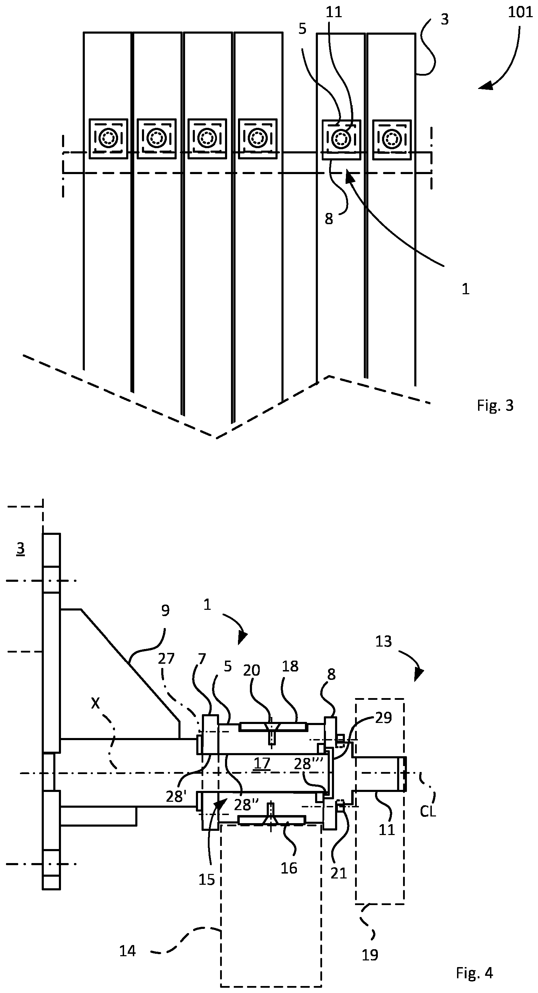

Fig. 3 illustrates a third example of a pendulum supporting device 1 of a filter press apparatus 101. The pendulum supporting device 1 is configured to be mounted to a filter plate member 3 of the filter press apparatus 101. The pendulum supporting device 1 comprises a carriage block member 5 arranged between and rigidly mounted to an inner carriage block holding member (not shown) pivotable arranged to a filter plate fitting member (not shown) of the pendulum supporting device 1. The pendulum supporting device 1 further comprises an outer carriage block holding member 8 and further comprises an engagement portion 11 configured for engagement with a drive member 13.

Fig. 4 illustrates a fourth example of a pendulum supporting device 1 configured to be arranged to a filter press apparatus (not shown). The pendulum supporting device 1 is configured to be mounted to a filter plate member 3 of the filter press apparatus. The pendulum supporting device 1 comprises a carriage block member 5 rigidly mounted to an inner carriage block holding member 7 pivotable arranged to a filter plate fitting member 9 of the pendulum supporting device 1. The pendulum supporting device 1 further comprises an outer carriage block holding member 8 having an engagement portion 11 configured for engagement with a drive member 13 of the filter press apparatus. The outer carriage block holding member 8 is rigidly mounted to the carriage block member 5 on the opposite side of the carriage block member 5 relative the mount of the inner carriage block holding member 7. The engagement portion 11 is rigidly mounted to or being an integral part of the outer carriage block holding member 8. The engagement portion 11 is configured for engagement with a coupling unit 19 of the drive member 13 for moving the filter plate member 3 by means of the pendulum supporting device 1. The filter plate fitting member 9 comprises a bearing element 15 configured to permit pendulum motion of the carriage block member 5 and/or inner and/or outer carriage block holding member 7 about an axis X relative the filter plate fitting member 9. An elongated guide member 14 of the filter press apparatus comprises a horisontally oriented supporting and guiding bar configured for supporting the carriage block member 5. The carriage block member 5 is configured to support the filter plate member 3 on the elongated guide member 14. The pendulum supporting device 1 is configured for pendulum motion of the filter plate member 3 by means of the pivotable arranged carriage block member 5, which also is adapted to slide along the elongated guide member. The bearing element 15 comprises a bearing shaft 17 being an integral portion of or rigidly mounted to the filter plate fitting member 9. The bearing shaft 17 extends through the inner carriage block holding member 7 and through the carriage block member 5 and partly into the outer carriage block holding member 8. The bearing shaft 17 extends along the axis X.

The bearing element 15 comprises a bearing shaft 17 joining the filter plate fitting member 9. The bearing shaft 17 extends through a first bore 28' of the inner carriage block holding member 7. The bearing shaft 17 extends into a second bore 28" of the carriage block member 5 and further into a third bore 28‴ of the outer carriage block holding member 8.

The carriage block member 5 comprises a lubrication channel 29 coupled to a lubrication supply source (not shown) and configured to lubricate the bearing element 15. The engagement portion 11 is an integrated part of or rigidly mounted to the outer carriage block holding member 8, which in turn is rigidly mounted to the carriage block member 5 by means of screws 21. The carriage block member 5 in turn is rigidly mounted to the inner carriage block holding member 7 by means of screws 27.

The carriage block member 5 further comprises a first replaceable sliding element 16 configured for supporting the pendulum supporting device 1 on the elongated guide member 14 and configured for sliding along the elongated guide member 14. The carriage block member 5 further comprises a second replaceable sliding element 18 configured for supporting the pendulum supporting device 1 onto the elongated guide member 14 and configured for sliding along the elongated guide member 14.

The first and second replaceable sliding element 16, 18 being fixedly mounted to the carriage block member by means of a screws 20. The bearing shaft 17 rigidly formed as an integral part of the filter plate fitting member 9. The bearing element 15 further comprises a second bore 28" formed in the carriage block member 5. The bearing shaft 17 is configured for rotation also in the second bore 28". The axis X or pivotal axis is directed ortogonally to the prolongation of the elongated guide member (e.g. extending in an horizontal direction).

The engagement portion 11 is positioned co-linear with the direction of the axis X. An engagement position of the engagement portion 11 engaging the coupling unit 19 of the drive member 13 is positioned co-linear or substantially co-linear with the direction of the axis X. The engagement portion 11 exhibits a centre line CL that lies along an imaginary prolongation of the axis X. Alternatively, an engagement position of the engagement portion engaging the coupling unit is positioned co-linear or substantially co-linear with and lies along the imaginary prolongation of the axis X.

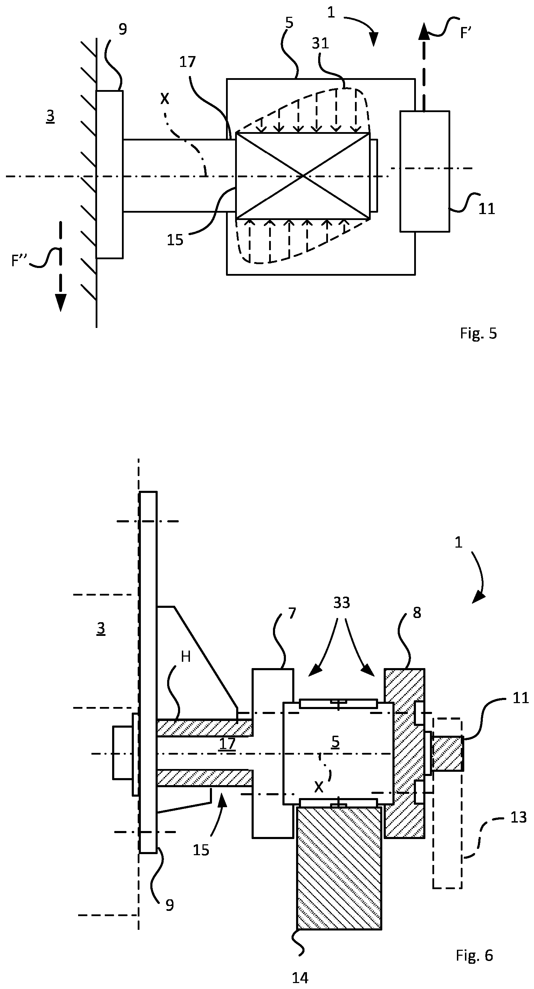

Fig. 5 illustrates a fifth example of a pendulum supporting device 1. The pendulum supporting device 1 is configured for moving and providing pendulum motion of a filter plate member 3 by means of the pivotable arranged carriage block member 5, which also is adapted to slide along an elongated guide member (not shown). An engagement portion 11 is rigidly mounted to the carriage block member 5. The engagement portion 11 is configured for engagement with a drive member (not shown) applying a first force F' on the engagement portion 11 for moving the filter plate member 3 by means of the pendulum supporting device 1 attached to the filter plate member 3. A second force F" strives to keep the filter plate member 3 in position in direction opposite the first force F' direction. Fig. 5 schematically shows force distribution scheme 31 acting upon the bearing element 15. Force distribution proprogates from the engagement portion 11 to a bearing shaft 17 of the filter plate fitting member 9 via the carriage block member 5 and the bearing element 15 in an efficient way, wherein the carriage block member 5 and the bearing element 15 function as load carrying members providing a stable structure suitable to efficintly distribute the first force F'.

Alternatively, upon application of the first force F' onto the engagement portion 11 for an un-loading position, even force distribution proprogates from the engagement portion 11 to the filter plate fitting member 9 via the carriage block member 5 and the bearing element 15. In such way wear and surface fatique in the bearing element is minimized so that any skew orientation of the filter plate member is avoided, which in turn implies that the filter plate member provides efficient filtering.

Fig. 6 illustrates a sixth example of a pendulum supporting device 1. The pendulum supporting device 1 is configured to be mounted to a filter plate member 3. The pendulum supporting device 1 comprises a carriage block member 5 arranged between and rigidly mounted to an inner carriage block holding member 7 pivotable arranged to a filter plate fitting member 9 of the pendulum supporting device 1. The pendulum supporting device 1 further comprises an outer carriage block holding member 8 with a rigidly thereto formed engagement portion 11 configured for engagement with a drive member 13. The engagement portion 11 thus is rigidly mounted to the outer carriage block holding member 8. The filter plate fitting member 9 comprises a bearing element 15 configured to permit pendulum motion of the carriage block member 5 relative the filter plate fitting member 9. An elongated guide member 14 is configured for supporting the carriage block member 5. The carriage block member 5 is configured to support the filter plate member 3 on the elongated guide member 14. The pendulum supporting device 1 is configured for pendulum motion of the filter plate member 3 by means of the pivotable arranged carriage block member 5, which further is adapted to slide along the elongated guide member 14. The bearing element 15 comprises a bearing shaft 17 rigidly formed as an integral part of the inner carriage block holding member 7. The bearing element 15 comprises a housing H rigidly formed as an integral part of the filter plate fitting member 9 . The bearing shaft 17 is configured for rotation in the housing H. Guide flanges 33 of the respective inner 7 and outer carriage block holding member 8 are configured to restrict and/or guide the carriage block member 5 along the elongated guide member 14.

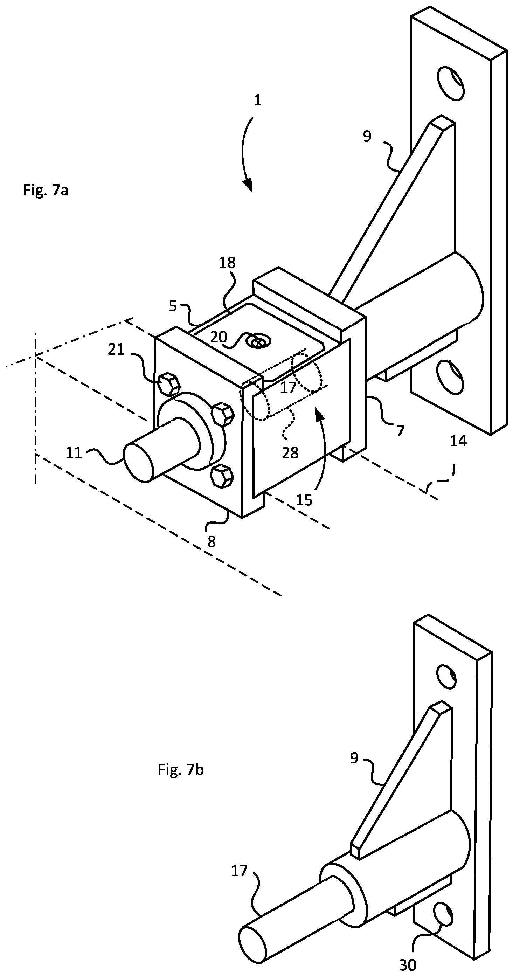

Figs. 7a-7b illustrates a seventh example of a pendulum supporting device . Fig. 7a illustrates a seventh example of a pendulum supporting device 1 in a perspective view. The pendulum supporting device 1 is configured to be mounted to a filter plate member (not shown). The pendulum supporting device 1 comprises a carriage block member 5 arranged rigidly mounted to an inner carriage block holding member 7 pivotable arranged to a filter plate fitting member 9 of the pendulum supporting device 1. An outer carriage block holding member 8 is rigidly mounted to the carriage block member 5 on the opposite side of the carriage block member 5 relative the mount of the inner carriage block holding member 7. An engagement portion 11 is rigidly mounted to or being an integral part of the outer carriage block holding member 8 of the pendulum supporting device 1. The engagement portion 11 is configured for engagement with a drive member (not shown). The engagement portion 11 is configured for engagement with a coupling unit (not shown) of the drive member for moving the filter plate member by means of the pendulum supporting device 1 and thereby the filter plate member.

The filter plate fitting member 9 comprises a bearing element 15 configured to permit pendulum motion of the carriage block member 5 and/or the inner carriage block holding member 7 relative the filter plate fitting member 9. An elongated guide member 14 comprising a horisontally oriented supporting and guiding bar configured for supporting the carriage block member 5. The carriage block member 5 is configured to support the filter plate member on the elongated guide member 14. The pendulum supporting device 1 is configured for pendulum motion of the filter plate member by means of the pivotable arranged carriage block member 5, which also is adapted to slide along the elongated guide member 14.

The bearing element 15 comprises a bearing shaft 17 being a portion of the filter plate fitting member 9. The bearing shaft 17 extends through a bore arrangement of the inner carriage block holding member 7 and through the carriage block member 5 and partly into the outer carriage block holding member 8.

The outer carriage block holding member 8 is mounted to the carriage block member 5 by means of at least one first set of screws 21. The carriage block member 5 is mounted to the inner carriage block holding member 7 by means of at least one second set of screws (not shown). The carriage block member 5 further comprises a first replaceable sliding element (not shown) configured for supporting the pendulum supporting device 1 on the elongated guide member 14 and configured for sliding along the elongated guide member 14. The carriage block member 5 further comprises a second replaceable sliding element 18 configured for supporting the pendulum supporting device 1 onto the elongated guide member 14 and configured for sliding along the elongated guide member 14. However, the second replaceable sliding element 18 faces upward and by rotating the carriage block member 5 half turn, the second replaceable sliding element 18 will support the pendulum supporting device 1. The first and second 18 replaceable sliding element are fixedly mounted to the carriage block member 5 by means of screws 20. The bearing element 15 comprises a bore 28 formed in the carriage block member 5. The bearing shaft 17 is configured for rotation in the bore 28.

Fig. 7b illustrates a filter plate fitting member 9 of a pendulum supporting device in a perspective view. The filter plate fitting member 9 a pair of through holes 30 configured for receiving a pair of screws for rigis mount to a fiber plate member (not shown). The filter plate fitting member 9 is formed with a bearing shaft 17 configured to be arranged in a corresponding bore (not shown) of an inner carriage block holding member (not shown), a carriage block member (not shown) and an outer carriage block holding member (not shown) of the a pendulum supporting device .

The present disclosure or disclosures may not be restricted to the examples described above, but many possibilities to modifications, or combinations of the described examples thereof should be apparent to a person with ordinary skill in the art without departing from the scope as defined in the appended claims.

## Claims

1. A pendulum supporting device (1) configured to be mounted to a filter plate member (3), the pendulum supporting device (1) comprises;
a carriage block member (5) arranged between and rigidly mounted to;
- an inner carriage block holding member (7) pivotable about an axis (X) of a filter plate fitting member (9) of the pendulum supporting device (1);
- an outer carriage block holding member (8);
and further comprises an engagement portion (11) configured for engagement with a drive member (13);
**characterized in that;**
- the engagement portion (11) is rigidly mounted to the outer carriage block holding member (8).

2. The pendulum supporting device (1) according to claim 1, **wherein** the filter plate fitting member (9) comprises a bearing element (15) configured to permit pendulum motion of the inner carriage block holding member (7) relative the filter plate fitting member (9).

3. The pendulum supporting device (1) according to claim 2, **wherein** the bearing element (15) comprises a bearing shaft (17) of the filter plate fitting member (9), which bearing shaft (17) extends through a first bore (28') of the inner carriage block holding member (7) for providing said pendulum motion.

4. The pendulum supporting device (1) according to claim 3, **wherein** the bearing shaft (17) extends into a second bore (28") of the carriage block member (5) and alternatively further into a third bore (28‴) of the outer carriage block holding member (8).

5. The pendulum supporting device (1) according to any of claims 2 to 4, **wherein** the carriage block member (5) comprises a lubrication channel coupled to a lubrication supply source and configured to lubricate the bearing element (15).

6. The pendulum supporting device (1) according to any of the preceding claims,
**wherein** the engagement portion (11) is configured to engage a coupling unit (19) of the drive member (13), which coupling unit (19) features a loading position and an un-loading position.

7. The pendulum supporting device (1) according to any of the preceding claims,
**wherein** the engagement portion (11) is an integrated part of the outer carriage block holding member (8), which is rigidly mounted to the the carriage block member (5) by means of at least one screw (21).

8. The pendulum supporting device (1) according to any of the preceding claims,
**wherein** the carriage block member (5) comprises a first replaceable sliding element (16) configured for supporting the pendulum supporting device (1) onto an elongated guide member (14).

9. The pendulum supporting device (1) according to claim 8, **wherein** the carriage block member (5) comprises a second replaceable sliding element (18) configured for supporting the pendulum supporting device (1) onto the elongated guide member (14).

10. The pendulum supporting device (1) according to any of the preceding claims,
**wherein** the engagement portion (11) is positioned in line with the direction of the axis (X).

11. A filter press apparatus (101) comprising a number of vertically supported filter plate members (3), the filter press apparatus (101) is configured for filtration technology including separation of solid metal ore material from fluid, including a loading position for compression of the filter plate members (3) to each other and an un-loading position for releasing the solid metal ore material, the filter press apparatus (101) comprises a drive member (13) configured to engage a pendulum supporting device (1) of the respective filter plate member (3) for achieving said unloading position; the filter press apparatus (101) is **characterized in that** said pendulum supporting device (1) comprises the features according to any of the preceding claims 1 to 10.

## Patentansprüche

1. Pendelstützvorrichtung (1), die dazu konfiguriert ist, auf einem Filterplattenglied (3) montiert zu sein, wobei die Pendelstützvorrichtung (1) Folgendes umfasst;
ein Wagenblockglied (5), das zwischen Folgendem angeordnet und starr darauf montiert ist;
- einem inneren Wagenblockhalterungsglied (7), das um eine Achse (X) eines Filterplattenpassglieds (9) der Pendelstützvorrichtung (1) schwenkbar ist;
- einem äußeren Wagenblockhalterungsglied (8);
und ferner einen Eingriffsabschnitt (11) umfasst, der zum Eingriff mit einem Antriebsglied (13) konfiguriert ist;
**dadurch gekennzeichnet, dass**;
- der Eingriffsabschnitt (11) starr auf dem äußeren Wagenblockhalterungsglied (8) montiert ist.

2. Pendelstützvorrichtung (1) nach Anspruch 1, wobei das Filterplattenpassglied (9) ein Lagerelement (15) umfasst, das dazu konfiguriert ist, eine Pendelbewegung des inneren Wagenblockhalterungsglieds (7) bezüglich des Filterplattenpassglieds (9) zu ermöglichen.

3. Pendelstützvorrichtung (1) nach Anspruch 2, wobei das Lagerelement (15) eine Lagerwelle (17) des Filterplattenpassglieds (9) umfasst, wobei sich die Lagerwelle (17) zum Bereitstellen der Pendelbewegung durch eine erste Bohrung (28') des inneren Wagenblockhalterungsglieds (7) hindurch erstreckt.

4. Pendelstützvorrichtung (1) nach Anspruch 3, wobei sich die Lagerwelle (17) in eine zweite Bohrung (28") des Wagenblockglieds (5) und alternativ weiter in eine dritte Bohrung (28''') des äußeren Wagenblockhalterungsglieds (8) hinein erstreckt.

5. Pendelstützvorrichtung (1) nach einem der Ansprüche 2 bis 4, wobei das Wagenblockglied (5) einen Schmierungskanal umfasst, der mit einer Schmierungszufuhrquelle gekoppelt und dazu konfiguriert ist, das Lagerelement (15) zu schmieren.

6. Pendelstützvorrichtung (1) nach einem der vorhergehenden Ansprüche, wobei der Eingriffsabschnitt (11) dazu konfiguriert ist, eine Kopplungseinheit (19) des Antriebsglieds (13) in Eingriff zu nehmen, wobei die Kopplungseinheit (19) eine Ladeposition und eine Entladeposition aufweist.

7. Pendelstützvorrichtung (1) nach einem der vorhergehenden Ansprüche, wobei der Eingriffsabschnitt (11) ein integrierter Teil des äußeren Wagenblockhalterungsglieds (8) ist, der mittels mindestens einer Schraube (21) starr auf dem dem Wagenblockglied (5) montiert ist.

8. Pendelstützvorrichtung (1) nach einem der vorhergehenden Ansprüche, wobei das Wagenblockglied (5) ein erstes austauschbares Gleitelement (16) umfasst, das zum Abstützen der Pendelstützvorrichtung (1) auf ein längliches Führungsglied (14) konfiguriert ist.

9. Pendelstützvorrichtung (1) nach Anspruch 8, wobei das Wagenblockglied (5) ein zweites austauschbares Gleitelement (18) umfasst, das zum Abstützen der Pendelstützvorrichtung (1) auf das längliche Führungsglied (14) konfiguriert ist.

10. Pendelstützvorrichtung (1) nach einem der vorhergehenden Ansprüche, wobei der Eingriffsabschnitt (11) in einer Linie mit der Richtung der Achse (X) positioniert ist.

11. Filterpresseinrichtung (101), umfassend eine Anzahl an vertikal gestützten Filterplattengliedern (3), wobei die Filterpresseinrichtung (101) für eine Filtrationstechnologie konfiguriert ist, beinhaltend eine Ausscheidung eines festen Metallerzmaterials aus einem Fluid, beinhaltend eine Ladeposition zur Verdichtung der Filterplattenglieder (3) zueinander und eine Entladeposition zum Freigeben des festen Metallerzmaterials, wobei die Filterpresseinrichtung (101) ein Antriebsglied (13) umfasst, das dazu konfiguriert ist, eine Pendelstützvorrichtung (1) des jeweiligen Filterplattenglieds (3) zum Erreichen der Entladeposition in Eingriff zu nehmen; wobei die Filterpresseinrichtung (101) **dadurch gekennzeichnet ist, dass** die Pendelstützvorrichtung (1) die Merkmale nach einem der vorhergehenden Ansprüche 1 bis 10 umfasst.

## Revendications

1. Dispositif de support de pendule (1) configuré pour être monté sur un élément de plaque de filtre (3), le dispositif de support de pendule (1) comprend ;
un élément de bloc de chariot (5) agencé entre et monté de manière rigide sur ;
- un élément de maintien de bloc de chariot interne (7) pivotant autour d'un axe (X) d'un élément de fixation de plaque de filtre (9) du dispositif de support de pendule (1) ;
- un élément de maintien de bloc de chariot externe (8) ;
et comprend en outre une partie de mise en prise (11) configurée pour une mise en prise avec un élément d'entraînement (13) ;
**caractérisé en ce que** ;
- la partie de mise en prise (11) est montée de manière rigide sur l'élément de maintien de bloc de chariot externe (8).

2. Dispositif de support de pendule (1) selon la revendication 1, dans lequel l'élément de fixation de plaque de filtre (9) comprend un élément de palier (15) configuré pour permettre un mouvement pendulaire de l'élément de maintien de bloc de chariot interne (7) par rapport à l'élément de fixation de plaque de filtre (9).

3. Dispositif de support de pendule (1) selon la revendication 2, dans lequel l'élément de palier (15) comprend un arbre de palier (17) de l'élément de fixation de plaque de filtre (9), lequel arbre de palier (17) s'étend à travers un premier alésage (28') de l'élément de maintien de bloc de chariot interne (7) pour assurer ledit mouvement pendulaire.

4. Dispositif de support de pendule (1) selon la revendication 3, dans lequel l'arbre de palier (17) s'étend dans un deuxième alésage (28'') de l'élément de bloc de chariot (5) et, alternativement, plus loin dans un troisième alésage (28‴) de l'élément de maintien de bloc de chariot externe (8).

5. Dispositif de support de pendule (1) selon l'une quelconque des revendications 2 à 4, dans lequel l'élément de bloc de chariot (5) comprend un canal de lubrification couplé à une source d'alimentation en lubrification et configuré pour lubrifier l'élément de palier (15).

6. Dispositif de support de pendule (1) selon l'une quelconque des revendications précédentes, dans lequel la partie de mise en prise (11) est configurée pour venir en prise avec une unité de couplage (19) de l'élément d'entraînement (13), laquelle unité de couplage (19) présente une position de chargement et une position de déchargement.

7. Dispositif de support de pendule (1) selon l'une quelconque des revendications précédentes, dans lequel la partie de mise en prise (11) est une partie intégrante de l'élément de maintien de bloc de chariot externe (8), qui est monté de manière rigide sur l'élément de bloc de chariot (5) au moyen d'au moins une vis (21).

8. Dispositif de support de pendule (1) selon l'une quelconque des revendications précédentes, dans lequel l'élément de bloc de chariot (5) comprend un premier élément coulissant remplaçable (16) configuré pour supporter le dispositif de support de pendule (1) sur un élément de guidage allongé (14).

9. Dispositif de support de pendule (1) selon la revendication 8, dans lequel l'élément de bloc de chariot (5) comprend un second élément coulissant remplaçable (18) configuré pour supporter le dispositif de support de pendule (1) sur l'élément de guidage allongé (14).

10. Dispositif de support de pendule (1) selon l'une quelconque des revendications précédentes, dans lequel la partie de mise en prise (11) est positionnée en ligne avec la direction de l'axe (X).

11. Appareil de filtre-presse (101) comprenant un nombre d'éléments de plaque de filtre (3) supportés verticalement, l'appareil de filtre-presse (101) est configuré pour une technologie de filtration incluant la séparation de matériau de minerai métallique solide à partir de fluide, incluant une position de chargement pour la compression des éléments de plaque de filtre (3) les uns contre les autres et une position de déchargement pour libérer le matériau de minerai métallique solide, l'appareil de filtre-presse (101) comprend un élément d'entraînement (13) configuré pour venir en prise avec un dispositif de support de pendule (1) de l'élément de plaque de filtre (3) respectif pour atteindre ladite position de déchargement ; l'appareil de filtre-presse (101) est **caractérisé en ce que** ledit dispositif de support de pendule (1) comprend les caractéristiques selon l'une quelconque des revendications précédentes 1 à 10.
